# EUROPEAN PATENT APPLICATION

(11) **EP 4 245 719 A1**
(43) Date of publication of application: **20.09.2023**
(21) Application number: 22195885.3
(22) Date of filing: 15.09.2022
(51) Int. Cl.: C01B 3/32, C01B 3/34, C10J 3/00

(54) **METHOD OF REGULATING THE H2/CO RATIO IN SYNTHETIC GASES BY SIMULTANEOUS GASIFICATION OF SOLID AND LIQUID BIOMASS AND/OR WASTE**

(30) Priority: 15.03.2022 LT 2022009
(71) Applicant: Lietuvos Energetikos Institutas, 44403 Kaunas (LT)
(72) Inventor: STRIUGAS, Nerijus, 44403 Kaunas (LT); TAMO?SIUNAS, Andrius, 44403 Kaunas (LT)
(74) Representative: Pranevicius, Gediminas

(57) **Abstract**

The invention relates to the control of the ratio of hydrogen and carbon monoxide (H₂/CO) in synthetic gas by simultaneous gasification of solid and liquid biomass and/or waste. It combines different gasification processes - gasification of solid biomass (SB) or waste in oxygen environment, and gasification of liquid biomass (LB) or waste by thermal water vapor plasma. The present invention proposes a method for combining different thermochemical processes and selecting different types of biomass or waste to obtain the highest possible H₂/CO ratio suitable for further gas conversion to biomaterials (biomethane, biomethanol and other bio-CxHyOz hydrocarbons). The present invention differs in that the proposed method for the production of synthetic gas allows the thermal decomposition of different fractions of biomass at the same time, selecting different types of biomass with different H/C ratios. As a result, synthetic gases with different H₂/CO ratios are generated simultaneously. A water vapor thermal plasma reactor is used for gasification of liquid biomass and/or waste, during which synthetic gas with H₂/CO > 2 is generated. In addition, by introducing synthetic gas with H₂/CO < 1 generated in the solid biomass gasification reactor into the plasma-chemical reactor and changing the SB/LB ratio, thus adjusting the H₂/CO ratio in the outlet synthesis gas within the range of the ratio which exists for solo SB and LB gasification modes.

## Description

### FIELD OF THE INVENTION

The invention relates to the control of the ratio of hydrogen and carbon monoxide (H₂/CO) in synthetic gas by simultaneous gasification of solid and liquid biomass and/or waste. It combines different gasification processes: gasification of solid biomass (SB) or waste in oxygen environment and gasification of liquid biomass (LB) or waste by thermal water vapour plasma. The present invention proposes a method for combining different thermochemical processes and selecting different types of biomass or waste to obtain the highest possible H₂/CO ratio suitable for further gas conversion to biomaterials, such as biomethane, bio-methanol and other bio-CₓH_{y}O_{z} hydrocarbons.

### BACKGROUND OF THE INVENTION

Currently, industrial synthetic gas of various compositions is produced using different techniques:
1. From coal, natural gas, oil products and other hydrocarbons (steam reforming process, partial oxidation, etc.);
2. From biomass and/or various organic wastes, using various catalytic and non-catalytic thermochemical processes, such as gasification, pyrolysis, liquefaction, dry reforming, supercritical water gasification, high or low temperature plasma gasification, microwave, radio waves, etc.;
3. Biological synthesis gas production methods, using various microorganisms.

Many of the listed processes are already commercialized and practically applied. Due to the high atomic ratios of H and C, synthetic gas production from fossil fuel is most attractive. Synthetic gas produced from fossil fuels, mainly coal and natural gas, is often further converted into higher value-added chemicals such as methanol. Methane (CH₄), the main component of natural gas, is especially suitable for such purpose, which during the catalytic steam reforming reaction decomposes into two main synthetic gas components - hydrogen (H₂) and carbon monoxide (CO) with molar H₂/CO ratio of 3:

CH₄ + H₂O ⇔ CO + 3 H₂, ΔH = +205 kJ/mol (1)

This ratio is particularly acceptable for the further synthesis of a chemical product such as methanol:

CO + 2 H₂ ⇔ 2 CH₃OH, ΔH = -91 kJ/mol (2)

Since synthetic gas has a higher H₂/CO ratio than needed to produce methanol, additional CO₂ is supplied, which reacts with the excess H₂:

CO₂ + 3 H₂ ⇔ CH₃OH + H₂O, ΔH = -50 kJ/mol (3)

While global greenhouse gas (CO₂) emissions in the atmosphere increase, many countries around the world are promoting the production of synthetic gas from renewable resources, i.e., by using biomass and/or other organic waste as a carbon source. Conventionally, the gasification process is used to produce synthesis gas from biomass and waste. Numerous different types of equipment have been developed for this process. However, the only essential difference between these processes is how the heat is supplied to the reaction: autothermal, i.e. using the heat released during the reaction, or allothermal, i.e. heat is delivered from an external source; and what kind of reaction atmosphere is used - oxidizing or inert. During gasification, synthetic gas of various compositions and proportions of components is produced. It is important to understand that various factors, including feedstock composition, gasification reactor type, and operating conditions have influence on synthetic gas composition and determine its further use. Typically conventional gasification reactors produces gases with the composition shown in Table 1 (Richard Thomson, Philip Kwong, Ejaz Ahmad, K.D.P. Nigam "Clean syngas from small commercial biomass gasifiers; a review of gasifier development, recent advances and performance evaluation, International Journal of Hydrogen Energy", Volume 45, Issue 41, 2020, Pages 21087-21111, ISSN 0360-3199, https://doi.org/10.1016/j.ijhydene.2020.05.160), which in most cases do not meet the above H₂/CO ratio necessary to produce targeting chemicals.

**Table 1. Typical H₂ and CO gas concentrations in synthetic gas obtained using conventional gasification reactors**

| **Type of gasification reactor** | **H₂, vol%** | **CO, vol%** | **H₂/CO** |
|---|---|---|---|
| Downdraft reactor (air) | 15-21 | 10-22 | 1.5-0.95 |
| Updraft reactor (air) | 10-14 | 15-20 | 0.6-0.7 |
| Fluidized bed reactor (air) | 12-26 | 15-22 | 0.8-1.18 |
| Circulating fluidized-bed reactor (air) | 15-17 | 15-18 | 1-0.94 |
| Entrained flow reactor (air, steam) | 55-58 | 25-31 | 2.2-1.87 |
| Dual fluidized-bed reactor (air) | 25-40 | 25-35 | 1- 1.14 |
| Two stage fixed bed (air) | 30-32 | 16-20 | 1.87-1.6 |
| Stratified downdraft reactor (air) | 22-23 | 25-27 | 0.88-0.85 |
| Stratified twin fired updraft/downdraft fixed bed (air) | 17 | 22 | 0.77 |
| Floating fluidised bed (air) | 18 | 20 | 0.9 |
| Plasmachemical reactor (air) | 45-55 | 36-52 | 1.25-1.05 |

In order to increase this ratio, in practice are applied partial CO gas removal, high temperature steam gasification, catalytic water gas shift process, or is added H₂ from renewable energy sources (RES).

Meanwhile, the present invention relates to the production of synthetic gas and the method of obtaining the required H₂/CO ratio in it, by using the combined technology of solid and liquid biomass and/or waste gasification. As mentioned above, exist a number of different gasification technologies and studies that proves the suitability of various biomass for synthetic gas production. However, only a few of them (see Table 1) are suitable to obtain H₂/CO ratio higher than 1.5. These processes use enough high temperatures >1100 °C and usually steam, therefore such conditions are not always suitable for problematic solid biomass (e.g., straw, sewage sludge, etc.) with high ash content and low melting point. The present invention proposes a new method for synthetic gas production utilising combined biomass and waste gasification, which allows simultaneously thermally decompose the biomass of different fractions while with proper selection of biomass and waste type obtain the highest possible H₂/CO ratio. The proposed method involves the new concept for combining two different gasification technologies: downdraft or other type of gasification reactor that is designed or capable thermally decompose solid biomass and/or wastes in an oxygen atmosphere by coupling with plasma-chemical gasification reactor designed or capable gasify a liquid biomass and/or waste in a steam environment. This method allows to exclude other methods listed above in order to control the H₂/CO ratio in the synthetic gas.

### SUMMARY OF THE INVENTION

The invention proposes a new method for generation a synthesis gas with desired H₂/CO ratio in the range of 0.7-2.7. The method utilize combined ordinary gasification system coupled with water vapour thermal plasma gasification, which allows the simultaneous thermal decomposition of solid and liquid biomass and/or waste. This invention proposes to use a water vapour thermal plasma in order to control H₂/CO ratio in the synthesis gas, which makes it possible to generate a gas with a hydrogen-to-carbon monoxide ratio of more than 2, when works sole, and to mix this plasma derived gas with the synthesis gas generated in an any type gasification unit.

In accordance with exemplary process parametric embodiment, which is presented in Table 4 of this invention, the combination of gasification processes is accomplished as follows: the synthetic gas generated in the solid biomass gasification reactor is fed into the plasma-chemical reactor after an any type of high-temperature particulate removal device. For a better plasma reactor performance, it is proposed to introduce the resulted synthetic gas behind the electric arc, i.e. directly into the plasma-chemical reactor. At the same time, the gasification of the selected liquid biomass and/or waste must take place in the plasma-chemical reactor under a water vapour plasma atmosphere. The liquid biomass is fed into the plasma-chemical reactor using an atomizer of any type, which allows to distribute the feedstock evenly and in fine droplets throughout the reactor volume. Such distribution allows for better mixing of the degradable material with the active particles formed by the high temperature plasma torch and also with the gas stream coming from the solid biomass gasification reactor. Finally after, the complex thermochemical reactions forms the synthesis gas with adjustable H₂/CO ratio.

The resulting gas mixture allows further usage for the synthesis of valuable chemicals like biomethane, biomethanol, bio-DME, etc. These and other features of the present invention will be explained in more detail hereafter.

### BRIEF DESCRIPTION OF THE DRAWINGS

The invention will be described in closer detail with reference to the explanatory drawings and schemes, wherein:
Fig. 1 is a schematic overview illustration of process main steps of the present invention;
Fig. 2 demonstrates the classification of biomass species according to atomic composition and atomic ratios;
Fig. 3 demonstrates a scheme of injection of synthesis gas from solid biomass into the plasma-chemical reactor where the liquid biomass is gasified.

### DETAILED DESCRIPTION OF THE INVENTION

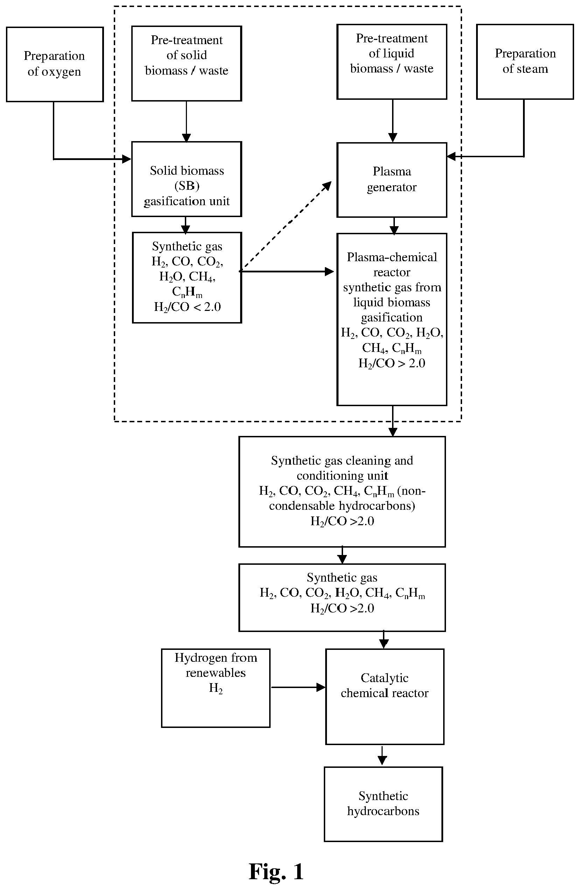

The principal schematic overview illustration of the proposed process of this invention is presented in Fig. 1. The process consists of several technological stages:

### 1. Pre-treatment and selection of feedstock

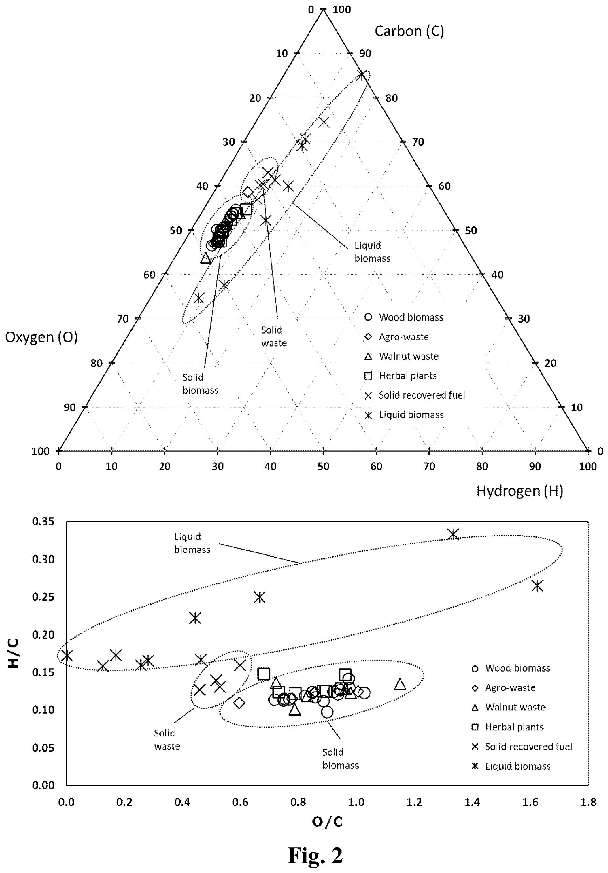

At this technological stage, depending on the type of gasification equipment used, the biomass is prepared accordingly, i.e., crushed, dried, fractionated or handled by other conventional physical or chemical methods. The invention proposes simultaneously use two different kind of biomass and/or waste, i.e., solid and liquid, to obtain synthetic gas. It is well known that the daf (dry and ash-free) mass fractions of the main chemical elements (C, H, O) of solid lignocellulosic biomass or its waste in raw material depend little on the origin and are more or less the same. (Fig 2). The H/C ratio of such feedstock varies in a narrow range, which indicates very limited concentration of hydrogen in the synthetic gas during gasification of these feedstocks when working in an autothermal reactor with oxygen. Liquid biomass (e.g. vegetable oils, animal fats, bioalcohols, etc.) or process wastes (e.g., glycerol) have higher hydrogen potential and higher H/C ratio. (Fig 2). Moreover, if a water vapour is used as a gasification agent, the overall H/C ratio of the process would increase even more. Therefore, such combination of two types of biomass allows to produce synthesis gas with a higher hydrogen content.

### 2. Gasification process

All known autothermal gasification reactors to date are suitable for solid biomass gasification in an oxygen environment. This invention does not recommend use air for gasification due to the high amount of nitrogen gas, which dilutes the reactive compounds in the synthetic gas, reduces their concentration, and thus complicates the usage of further synthesis devices. Thermal plasma gasification reactors are proposed for gasification of liquid biomass. In order to produce a synthetic gas with a higher H₂/CO ratio, the present invention proposes to use water vapour as the plasma-forming gas. Table 2 shows the composition of solid and liquid biomass feedstock from which the syngas was obtained.

**Table 2. The composition of solid and liquid biomass feedstock used for experimental studies**

| **Parameters** | **Woodchips** | **Glycerol** |
|---|---|---|
| Biomass type | Solid | liquid |
| Moisture, wt% | 10.6 | < 0.01 |
| Volatile matter, wt% | 75.8 | 97.75 |
| Fixed-carbon, wt% | 12.8 | < 0.01 |
| Ash, wt% | 0.8 | 2.27 |
| Higher heating value, MJ/kg | 17.3 | 15.19 |
| C, wt% | 48.77 | 33.75 |
| H, wt% | 5.85 | 8.96 |
| O (diff.), wt% | 44.52 | 54.8 |
| N, wt% | 0.05 | 0.06 |
| S, wt% | 0.01 | 0.011 |

First, the gasification tests of selected biomass was carried out in different separate gasifiers. As can be seen from Table 3, the average H₂/CO ratio in the gas during solid wood chip gasification was 0.71. Meanwhile, for the liquid biomass waste, i.e., glycerol, this ratio can be as high as 2.74, as found during the tests. It can be even higher when the water content and plasmatron power are increased.

**Table 3. Main parameters of experimental studies of solid and liquid biomass gasification**

| **Parameters** | | **Solid biomass gasification reactor** | **Liquid biomass plasma-chemical gasification reactor** |
|---|---|---|---|
| Feedstock feeding, kg/h | | 34.1 | 7.88 |
| PG power, kW | | - | 57.9 |
| Oxygen flow, Nm³/h: | | 8.3 | |
| | - Primary flow | 5.1 | |
| | - Secondary flow | 3.2 | |
| Steam flow, kg/h | | - | 14.76 |
| Oxygen excess ratio | | 0.25 | |
| Generated gas flow, Nm³/h | | 46 | 16.56 |
| Gas yield, Nm³/kg | | 1.35 | 2.10 |
| Dry product gas composition vol. %: | | | |
| H₂ | | 32.60 | 58.11 |
| CO | | 46.01 | 21.16 |
| CH₄ | | 3.29 | 3.24 |
| C₂H₂ | | 0.15 | 0.14 |
| C₂H₆ | | 0.01 | 0.02 |
| C₃H₈ | | 0.02 | 0.03 |
| CO₂ | | 17.61 | 18.21 |
| N₂ | | 0.17 | |
| H₂/CO | | 0.71 | 2.74 |
| H₂/CO₂ | | 1.85 | 3.19 |
| H₂/(CO+CO₂) | | 0.51 | 1.46 |
| Lover heating value, MJ/Nm³ | | 10.54 | 10.13 |
| Tar content (>C₁₀H₈), g/Nm³ | | 4.98 (1.76) | 0.37 (0.03) |
| Product gas temperature, °C | | 600 | 770 |

### 3. Coupling of gasification units and the H₂/CO ratio adjusting

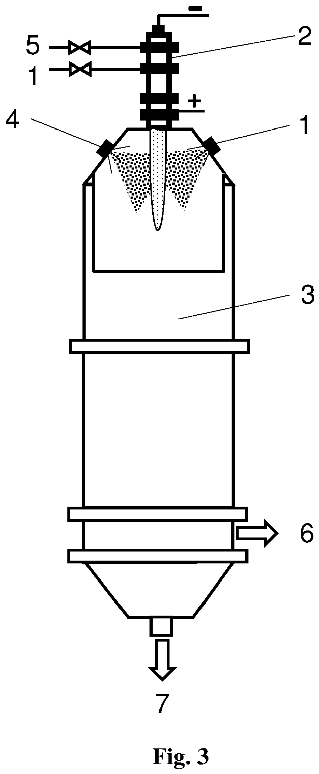

At this stage of the process, a coupling of gasification processes is proposed, as follows: the synthetic gas 1 generated in the solid biomass gasification reactor is fed into the plasma-chemical reactor 3 after an any type of high-temperature particulate removal device, e.g., cyclone or porous ceramic or metal filter. There are two possible ways how to inject the generated gas 1: first, into the plasma generator 2 or directly into the plasma-chemical reactor 3 (Fig. 3). Previous studies showed that plasma stability is reduced by injecting additional gas along with the plasma-forming gas directly into the plasma generator 2 (Nerijus Striugas, Andrius Tamošiunas, Liutauras Marcinauskas, Rolandas Paulauskas, Kestutis Zakarauskas, Raminta Skvorčinskienė "A sustainable approach for plasma reforming of tail biogas for onsite syngas production during lean combustion operation, Energy Conversion and Management", 209 , 2020, 112617, ISSN 0196-8904, https://doi.org/10.1016/j.enconman.2020.112617). Therefore, in order to get more stable operation of the plasma generator, as a second option, this invention proposes to inject the generated synthetic gas 1 after the electric arc, directly into the plasma-chemical reactor 3. After entering the reactor 3, the mixture of gases undergoes series of thermochemical reactions where remaining heavier compounds are further decomposed to final products consisting mainly of H₂ and CO gases. At the same time, the gasification of the liquid biomass occurs. In the present invention, we used raw glycerol, which enters the plasma-chemical reactor 3 through the inlet 4. The water vapour was used as a plasma forming gas. Water vapour plasma is produced by supplying superheated steam 5 to an atmospheric pressure direct current (DC) linear plasma generator 2. The generator allows to create plasma stream with an average outlet temperature of 2800 - 3100 K. The liquid biomass is fed into the plasma-chemical reactor 3 using an atomizer of any type, which allows to distribute the feedstock evenly and in fine droplets throughout the reactor volume. Such distribution allows for better mixing of the degradable material with the active particles formed by the high temperature plasma torch and also with the gas stream 1 coming from the solid biomass gasification reactor. After a complex thermochemical reaction, synthetic gas 6 with H₂/CO>2 is formed. The slag formed during combustion is removed through the bottom 7 of the plasma-chemical reactor. The resulting gas mixture allows further usage for the synthesis of valuable chemicals like biomethane, biomethanol, bio-DME, etc. Table 4 shows the results of experimental studies, which prove that, depending on the mixing proportions, the required H₂/CO ratio might be obtained.

**Table 4. The main parameters of the experimental study of combined solid and liquid biomass gasification**

| **Parameter** | | **Combined technological unit** | | |
|---|---|---|---|---|
| | | **Experiment No. 1** | **Experiment No. 2** | **Experiment No. 3** |
| Solid biomass feeding, kg/h | | 28 | 28 | 28 |
| Oxygen amount, Nm³/h: | | 6.74 | 6.74 | 6.74 |
| | - Primary flow | 4.16 | 4.16 | 4.16 |
| | - Secondary flow | 2.58 | 2.58 | 2.58 |
| Produced gas yield from solid biomass gasification (SB), Nm³/h | | 36 | 36 | 36 |
| Liquid biomass feeding, kg/h | | 7.8 | 7.8 | 7.8 |
| PG power, kW | | 60 | 60 | 60 |
| Produced gas yield from liquid biomass gasification (LB), Nm³/h | | 22.5 | 22.5 | 22.5 |
| Steam supply, kg/h | | 11.88 | 11.88 | 11.88 |
| SB gas flow from solid biomass gasification to plasma-chemical reactor, Nm³/h | | 6.3 | 9.0 | 15.0 |
| PCHR gas yield, Nm³/h | | 10.08 | 12.78 | 18.78 |
| SB/LB | | 1.67 | 2.38 | 3.96 |
| Dry products gas composition vol.%: | | | | |
| H₂ | | 50.61 | 42.82 | 39.79 |
| CO | | 24.98 | 33.38 | 40.02 |
| CH₄ | | 1.33 | 2.34 | 4.15 |
| C₂H₂ | | 0.10 | 0.29 | 0.57 |
| C₂H₆ | | 0.01 | 0.01 | 0.06 |
| C₃H₈ | | | | 0.01 |
| CO₂ | | 25.83 | 25.31 | 20.29 |
| | | | | |
| H₂/CO | | 2.02 | 1.28 | 1.00 |
| H₂/CO₂ | | 1,96 | 1,69 | 1,96 |
| H₂/(CO+CO₂) | | 1,0 | 0,73 | 0,66 |

During this test, the amount of synthetic gas generated by the solid biomass gasifier (SB) was changed, while the liquid biomass (LB) gasification gas flow was kept constant. From the presented results can be seen that as the SB/LB ratio decreases, the H₂/CO ratio increases. It was also found that when a gas mixture with a different SB/LB ratio is supplied to the plasma-chemical reactor, the H₂/CO ratio changes in a non-linear dependence, which indicates the occurrence of additional thermochemical reactions.

### 4. Synthesis gas cleaning and conditioning

The last stage of the process depends on the further use of a synthesis gas. However, before any other stage of the process (e.g., synthesis of synthetic hydrocarbons), any gas cooling, drying, cleaning from remaining solid, liquid or gaseous impurity residues is proposed to use. These processes will ensure stable and reliable operation of other devices.

## Claims

1. A method for the H₂/CO ratio control in synthetic gas using combined solid and liquid biomass and/or waste gasification, **characterised by** the steps of:
(a) using simultaneous combined gasification of solid biomass (SB) and liquid biomass (LB) and/or waste to simultaneously thermally decompose different fractions of biomass;
(b) selecting biomass type with different H/C ratios, thus simultaneously producing synthetic gas with different H₂/CO ratios;
(c) using water vapour thermal plasma reactor to gasify liquid biomass and/or waste to produce synthetic gas with H₂/CO > 2;
(d) additionally injecting into the plasma-chemical reactor a gas generated in the solid biomass gasification reactor containing H₂/CO < 1 and varying the SB/LB ratio of both flows, thus adjusting the H₂/CO ratio in the outlet synthesis gas within the range of the ratio which exists for solo SB and LB gasification modes.
